(19) Europäisches Patentamt
European Patent Office
Office européen des brevets

(11) Veröffentlichungsnummer: **0 424 960 A2**

(12) **EUROPÄISCHE PATENTANMELDUNG**

(21) Anmeldenummer: **90120589.8**

(22) Anmeldetag: **26.10.90**

(51) Int. Cl.5: **C07F 7/08**, C07F 7/18, C08G 77/38, C08G 77/20, C08L 83/07

(30) Priorität: **27.10.89 DE 3935775**

(43) Veröffentlichungstag der Anmeldung: **02.05.91 Patentblatt 91/18**

(84) Benannte Vertragsstaaten: **BE DE FR GB IT NL**

(71) Anmelder: **WACKER-CHEMIE GMBH**
**Prinzregentenstrasse 22**
**W-8000 München 22(DE)**

(72) Erfinder: **Herzig, Christian, Dr.**
**Schröckenbauer 1**
**W-8221 Taching(DE)**

(54) **Alkenylgruppen aufweisende Organosiliciumverbindungen, Verfahren zu ihrer Herstellung und Verwendung dieser Organosiliciumverbindungen.**

(57) Beschrieben werden neue Alkenylgruppen aufweisende Organosiliciumverbindungen aus durchschnittlichen Einheiten der Formel

$$A_aR_bSi(OR^1)_cO_{\frac{4-(a+b+c)}{2}} \quad (I),$$

wobei R und $R^1$ die im Anspruch 1 dafür angegebene Bedeutung haben und
A ein Rest der Formel

$$(H_2C{=}CR^4CHR^3OR^2)_xH_{1-x}\underset{|}{C}{=}CH_{2-y}(R^2OCHR^3CR^4{=}CH_2)_y$$

ist, wobei $R^2$, $R^3$ und $R^4$ die im Anspruch 1 dafür angegebene Bedeutung haben,
x 0 oder 1, y 0 oder 1, mit der Maßgabe, daß die Summe x + y 1 oder 2 ist,
a 0 oder 1, durchschnittlich 0,003 bis 1,0,
b 0, 1, 2 oder 3, durchschnittlich 0,0 bis 3,0,
c 0, 1, 2 oder 3, durchschnittlich 0,0 bis 3,0
und die Summe $a+b+c \leq 4$, durchschnittlich 1,5 bis 4,0 ist, mit der Maßgabe, daß mindestens ein Rest A je Molekül enthalten ist.

EP 0 424 960 A2

# ALKENYLGRUPPEN AUFWEISENDE ORGANOSILICIUMVERBINDUNGEN, VERFAHREN ZU IHRER HERSTELLUNG UND VERWENDUNG DIESER ORGANOSILICIUMVERBINDUNGEN

Gemäß US-A 4 609 574 (ausgegeben 2. September 1986, J. R. Keryk et al., Dow Corning Corporation) weisen in Organopolysiloxanzusammensetzungen Si-gebundene höhere Alkenylgruppen, wie z. B. 5-Hexenylgruppen, eine größere Reaktivität gegenüber Si-gebundenem Wasserstoff auf als Si-gebundene Vinylgruppen. Die höhere Alkenylgruppen enthaltenden Organopolysiloxane können durch Umsetzung von Si-gebundenen Wasserstoff aufweisendem Organopolysiloxan mit α,ω-Dien hergestellt werden, wobei aber immer Mehrfachaddition auftritt. Bevorzugt werden daher die höhere Alkenylgruppen enthaltenden Organopolysiloxane aus den entsprechenden Silanen durch Umsetzung von α,ω-Dien in großem Überschuß mit Silan mit Si-gebundenem Wasserstoff und anschließender Hydrolyse dieser Silane und Equilibrierung dieser Silane mit Organopolysiloxanen gewonnen.

In E. Lukevits et al., Zhurnal Obshchei Khimii, Vol. 56, 140-143, 1986 (Chemical Abstracts, Vol. 105, 226720 h, 1986) ist die Hydrosilylierung von Alkenen und Alkinen mit Dimethyl(2-thienyl)silan beschrieben. Die Dreifachbindung weist dabei eine größere Reaktivität als die Doppelbindung auf.

Es bestand die Aufgabe Alkenylgruppen aufweisende Organosiliciumverbindungen bereitzustellen, die in einem einfachen Verfahren mit hoher Selektivität hergestellt werden können. Die Aufgabe wird durch die Erfindung gelöst.

Gegenstand der Erfindung sind Alkenylgruppen aufweisende Organosiliciumverbindungen aus durchschnittlichen Einheiten der Formel

$$A_aR_bSi(OR^1)_cO_{\frac{4-(a+b+c)}{2}} \qquad (I) ,$$

wobei R gleich oder verschieden ist, einen einwertigen, gegebenenfalls halogenierten Kohlenwasserstoffrest mit 1 bis 18 Kohlenstoffatom(en) je Rest bedeutet, $R^1$ gleich oder verschieden ist, einen Alkylrest mit 1 bis 8 Kohlenstoffatom(en) je Rest, der durch ein Ethersauerstoffatom substituiert sein kann, bedeutet, und A ein Rest der Formel

$$(H_2C{=}CR^4CHR^3OR^2)_xH_{1-x}\underset{|}{C}{=}CH_{2-y}(R^2OCHR^3CR^4{=}CH_2)_y$$

ist, wobei $R^2$ einen Alkylenrest mit 1 bis 4 Kohlenstoffatom(en) je Rest,
$R^3$ ein Wasserstoffatom oder einen Methylrest,
$R^4$ ein Wasserstoffatom oder einen Methyl- oder Ethylrest, x 0 oder 1, y 0 oder 1, mit der Maßgabe, daß die Summe x + y 1 oder 2 ist,
a 0 oder 1, durchschnittlich 0,003 bis 1,0,
b 0, 1, 2 oder 3, durchschnittlich 0,0 bis 3,0,
c 0, 1, 2 oder 3, durchschnittlich 0,0 bis 3,0
und die Summe a + b + c ≦ 4, durchschnittlich 1,5 bis 4,0 ist, mit der Maßgabe, daß mindestens ein Rest A je Molekül enthalten ist.

Gegenstand der Erfindung ist weiterhin ein Verfahren zur Herstellung der Alkenylgruppen aufweisenden Organosiliciumverbindungen, dadurch gekennzeichnet, daß eine organische Verbindung (1) der Formel
$(H_2C = CR^4CHR^3OR^2)_xH_{1-x}C{\equiv}CH_{1-y}\ (R^2OCHR^3CR^4 = CH_2)_y$
wobei $R^2$, $R^3$ und $R^4$ die oben dafür angegebene Bedeutung haben, an eine Organosiliciumverbindung (2) mit mindestens einem Si-gebundenem Wassserstoffatom in ihrem Molekül in Gegenwart von die Anlagerung von Si-gebundenem Wasserstoff an aliphatische Mehrfachbindung förderndem Katalysator (3) angelagert wird.

Vorzugsweise sind die erfindungsmäßigen Organosiliciumverbindungen Silane oder Organopolysiloxane

Die erfindungsgemäßen Organosiliciumverbindungen besitzen vorzugsweise ein durchschnittliches Molekulargewicht von 170 bis 100 000 g/Mol, bevorzugt 170 bis 10 000 g/Mol, und vorzugsweise eine Viskosität von 1 bis 1 000 000 $mm^2 \cdot s^{-1}$ bei 25° C, bevorzugt 1 bis 20 000 $mm^2 \cdot s^{-1}$ bei 25° C.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest.

Beispiele für Alkylreste $R^1$ sind Methyl-, Ethyl-, n-Propyl-, iso-Propyl-, 1-n-Butyl-, 2-n-Butyl-, iso-Butyl-, tert.-Butyl-. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Beispiele für Alkylenreste $R^2$ sind solche der Formel $-(CH_2)-$, $-CH(CH_3)-$, $-C(CH_3)_2-$, $-C(CH_3)(C_2H_5)-$, $-(CH_2)_2-$ und $-(CH_2)_4-$.

Bevorzugt sind die Rest $R^3$ und $R^4$ Wasserstoffatome.

Bevorzugt haben x und y jeweils einen Wert von 1.

Beispiele für Reste A sind solche der Formel

$$-CH{=}CHCH_2OCH_2CH{=}CH_2 \text{ und } H_2C{=}\underset{|}{C}CH_2OCH_2CH{=}CH_2 ,$$

$$-CH{=}CHCH_2OCH(CH_3)CH{=}CH_2 \text{ und } H_2C{=}\underset{|}{C}CH_2OCH(CH_3)CH{=}CH_2 ,$$

$$-CH{=}CHCH(CH_3)OCH_2CH{=}CH_2 \text{ und } H_2C{=}\underset{|}{C}CH(CH_3)OCH_2CH{=}CH_2 ,$$

$$-CH{=}CHCH(CH_3)OCH_2C(CH_3){=}CH_2 \text{ und } H_2C{=}\underset{|}{C}CH(CH_3)OCH_2C(CH_3){=}CH_2 ,$$

$$H_2C{=}CHCH_2OCH_2\underset{|}{C}{=}CHCH_2OCH_2CH{=}CH_2 ,$$

$$H_2C{=}CHCH_2OCH(CH_3)\underset{|}{C}{=}CHCH(CH_3)OCH_2CH{=}CH_2 \text{ und}$$

$$H_2C{=}C(CH_3)CH_2OCH_2\underset{|}{C}{=}CHCH_2OCH_2C(CH_3){=}CH_2 ,$$

wobei der Rest der Formel

$$H_2C{=}CHCH_2OCH_2\underset{|}{C}{=}CHCH_2OCH_2CH{=}CH_2$$

ein Beispiel für einen bevorzugten Rest A ist.

Bevorzugt als Alkenylgruppen aufweisende Silane sind solche der Formel

$AR_dSi(OR^1)_{3-d}$ (II)

wobei A, R und $R^1$ die oben dafür angegebene Bedeutung haben und d 0, 1, oder 2 ist.

Bevorzugt als Alkenylgruppen aufweisende Organopolysiloxane sind solche der Formel

$A_gR_{3-g}SiO(SiR_2O)_n(SiR_2O)_mSiR_{3-g}A_g$ (III)

wobei A und R die oben dafür angegebene Bedeutung haben,

g 0 oder 1,

n 0 oder eine ganze Zahl von 1 bis 1500 und

m 0 oder eine ganze Zahl von 1 bis 100 ist,

mit der Maßgabe, daß mindestens ein Rest A je Molekül enthalten ist.

Beispiele für organische Verbindungen (1), die bei dem erfindungsgemäßen Verfahren eingesetzt werden, sind solche der Formel

$HC{\equiv}CCH_2OCH_2CH=CH_2$ ,

$HC{\equiv}CCH_2OCH(CH_3)CH=CH_2$ ,

$HC{\equiv}CCH(CH_3)OCH_2CH=CH_2$ ,

$HC{\equiv}CCH(CH_3)OCH_2C(CH_3)=CH_2$ ,

$H_2C=CHCH_2OCH_2C{\equiv}CHCH_2OCH_2CH=CH_2$ ,

$H_2C=CHCH_2OCH(CH_3)C{\equiv}CHCH(CH_3)OCH_2CH=CH_2$ und

$H_2C=C(CH_3)CH_2OCH_2C{\equiv}CHCH_2OCH_2C(CH_3)=CH_2$ .

Verfahren zur Herstellung der organischen Verbindungen (1) sind in EP-B 46 731 (veröffentlicht 3. Oktobter 1984, F. Lohse et al., Ciba-Geigy AG) und US-A 3 149 168 (ausgegeben 15. September 1964, S. I. Karlan et al., Thiokol Chemical Corp.) beschrieben.

Vorzugsweise werden als Organosiliciumverbindung (2) mit mindestens einem Si-gebundenem Wasserstoffatom je Molekül Silane mit einem Si-gebundenem Wasserstoffatom je Molekül oder Organopolysiloxane mit mindestens einem Si-gebundenem Wasserstoffatom je Molekül der Formel

$$H_eR_fSiO_{\frac{4-(e+f)}{2}} \quad (IV) ,$$

wobei R die oben dafür angegebene Bedeutung hat,

e 0 oder 1, durchschnittlich 0,003 bis 1,0,

f 0, 1, 2 oder 3, durchschnittlich 0,0 bis 3,0 und

die Summe von e + f nicht größer als 3 ist, eingesetzt.

Die Organopolysiloxane mit mindestens einem Si-gebundenem Wasserstoffatom enthalten vorzugsweise mindestens 0,04 Gew.-%, bevorzugt 0,1 bis 1,6 Gew.-%, Si-gebundenen Wasserstoff und ihre durchschnittliche Viskosität beträgt vorzugsweise 2 bis 20 000 $mm^2 \cdot s^{-1}$ bei 25° C, bevorzugt 2 bis 2000 $mm^2 \cdot s^{-1}$ bei 25° C.

Bevorzugt werden als Silane mit einem Si-gebundenem Wasserstoffatom je Molekül solche der Formel

$HR_dSi(OR^1)_{3-d}$ (V) ,

wobei R, $R^1$ und d die oben dafür angegebene Bedeutung haben, verwendet.

Bevorzugt werden als Organopolysiloxane mit mindestens einem Si-gebundenem Wasserstoffatom je Molekül solche der Formel

$H_hR_{3-h}SiO(SiR_2O)_o(SiRHO)_pSiR_{3-h}H_h$ (VI) ,

wobei R die oben dafür angegebene Bedeutung hat,

h 0 oder 1,

o 0 oder eine ganze Zahl von 1 bis 1500 und

p 0 oder eine ganze Zahl von 1 bis 100 ist, verwendet.

Ein bevorzugtes Beispiel für Silane der Formel (V) ist Triethoxysilan. Bevorzugte Beispiele für Organopolysiloxane der Formel (VI) sind Mischpolymerisate aus Dimethylhydrogen siloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan, Dimethylsiloxan-und Methylhydrogensiloxaneinheiten.

Verfahren zum Herstellen von Organopolysiloxanen mit mindestens einem Si-gebundenem Wasserstoffatom je Molekül, auch von solchen der bevorzugten Art, sind allgemein bekannt.

Organische Verbindung (1) wird bei dem erfindungsgemäßen Verfahren vorzugsweise in solchen

Mengen eingesetzt, daß 1 bis 2 Mol, bevorzugt 1,05 bis 1,20 Mol, organische Verbindung (1) je Grammatom Si-gebundener Wasserstoff in der Organosiliciumverbindung (2) vorliegt.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenen Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 200 Gew.-ppm (Gewichtsteilen je Million Gewichtsteilen), bevorzugt in Mengen von 1 bis 50 Gew.-ppm, jeweils berechnet als elementares Platin und bezogen auf das Gesamtgewicht von organische Verbindung (1) und Organosiliciumverbindung (2) eingesetzt.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 80 °C bis 150 °C, bevorzugt 100 °C bis 150 °C, besonders bevorzugt 120 °C bis 130 °C, durchgeführt.

Bei dem erfindungsgemäßen Verfahren können inerte, organische Lösungsmittel mitverwendet werden, obwohl die Mitverwendung von inerten, organischen Lösungsmittel nicht bevorzugt ist. Beispiele für inerte, organische Lösungsmittel sind Toluol, Xylol, Octanisomere und Butylacetat.

Von den nach dem erfindungsgemäßen Verfahren hergestellten Alkenylgruppen enthaltenden Organosiliciumverbindungen wird vorzugsweise überschüssige organische Verbindung (1) sowie gegebenenfalls mitverwendetes inertes organisches Lösungsmittel destillativ entfernt.

Die Anlagerung von Organosiliciumverbindung (2) mit mindestens einem Si-gebundenem Wasserstoffatom je Molekül an organische Verbindung (1) erfolgt sowohl für $x = 0$ und $y = 1$ oder $x = 1$ und $y = 0$ selektiv an der endständigen Dreifachbindung und nicht an der endständigen Doppelbindung als auch für $x = 1$ und $y = 1$ selektiv an der mittelständigen Dreifachbindung und nicht an den endständigen Doppelbindungen. So lassen sich Alkenylgruppen enthaltende Organopolysiloxane direkt aus Organopolysiloxan mit Si-gebundenen Wasserstoffatomen und organischer Verbindung (1) herstellen, ohne daß es zu einer Vernetzung über die endständigen Doppelbindungen kommt. Weiterhin werden erfindungsgemäß Alkenylgruppen enthaltende Organosiliciumverbindungen erhalten, ohne daß eine Doppelbindungsisomerisierung bei der bzw. den end ständigen Doppelbindungen von der Endposition in die Kette stattfindet.

Als Organopolysiloxane (4), mit dem das nach Beendigung der 1. Stufe vorliegende, Alkenylgruppen aufweisende Organopolysiloxan gegebenenfalls äquilibriert wird, werden vorzugsweise solche ausgewählt aus der Gruppe bestehend aus linearen, endständige Triorganosiloxygruppen aufweisenden Organopolysiloxanen der Formel

$R_3SiO(SiR_2O)_rSiR_3$ ,

wobei R die oben dafür angegebene Bedeutung hat und r 0 oder eine ganze Zahl im Wert von 1 bis 1500 ist,

linearen, endständige Hydroxylgruppen aufweisenden Organopolysiloxanen der Formel

$HO(SiR_2O)_sH$ ,

wobei R die oben dafür angegebene Bedeutung hat und s eine ganze Zahl im Wert von 1 bis 1500 ist,

cyclischen Organopolysiloxanen der Formel

$(R_2SiO)_t$ ,

wobei R die oben dafür angegebene Bedeutung hat und t eine ganze Zahl von 3 bis 12 ist,

und Mischpolymerisaten aus Einheiten der Formel

$R_2SiO$ und $RSiO_{3/2}$ ,

wobei R die oben dafür angegebene Bedeutung hat, eingesetzt.

Die Mengenverhältnisse der in der gegebenenfalls durchgeführten 2. Stufe des erfindungsgemäßen

Verfahrens eingesetzten Organopolysiloxane werden lediglich durch den gewünschten Anteil der Alkenylgruppen in dem in der gegebenenfalls durchgeführten 2. Stufe des erfindungsgemäßen Verfahrens erzeugten Organopolysiloxane und durch die gewünschte mittlere Kettenlänge bestimmt.

Bei dem gegebenenfalls in der 2. Stufe des erfindungsgemäßen Verfahrens durchgeführten Äquilibrieren werden vorzugsweise basische Katalysatoren, welche die Äquilibrierung fördern, eingesetzt. Beispiele für solche Katalysatoren sind Alkalihydroxide, wie Natriumhydroxid und Kaliumhydroxid, Trimethylbenzylammoniumhydroxid und Tetramethylammoniumhydroxid Bevorzugt sind Alkalihydroxide.
Alkalihydroxide werden vorzugsweise in Mengen von 50 bis 10 000 Gew.-ppm (= Teile je Million), insbesondere 500 bis 2000 Gew.-ppm, jeweils bezogen auf das Gesamtgewicht der eingesetzten Organosiliciumverbindungen, verwendet. Die Verwendung saurer Äquilibrierungskatalysatoren ist zwar möglich, jedoch nicht bevorzugt.

Die gegebenenfalls in der 2. Stufe des erfindungsgemäßen Verfahrens durchgeführte Äquilibrierung wird vorzugsweise bei 80 °C bis 150 °C und beim Druck der umgebenden Atmosphäre, also etwa bei 1020 hPa (abs.) durchgeführt. Falls erwünscht, können aber auch höhere oder niedrigere Drücke angewendet werden. Das Äquilibrieren wird vorzugsweise in 5 bis 20 Gew.-%, bezogen auf das Gesamtgewicht der jeweils eingesetzten Organosiliciumverbindungen, in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Die verschiedenen Stufen des erfindungsgemäßen Verfahrens können in ein und demselben Reaktionsgefäß hintereinander oder in von einander getrennten Reaktionsgefäßen durchgeführt werden. Vorzugsweise wird es in ein und demselben Reaktionsgefäß hintereinander durchgeführt. Das erfindungsgemäße Verfahren kann absatzweise, halbkontinuierlich oder vollkontinuierlich durchgeführt werden.

Die erfindungsgemäßen, Alkenylgruppen aufweisenden Organopolysiloxane werden wie die Si-gebundene Vinylgruppen aufweisenden Organopolysiloxane mit Si-gebundenem Wasserstoff aufweisenden Organopolysiloxanen in Gegenwart von Hydrosilylierungskatalysatoren vernetzt.

Die erfindungsgemäßen Organopolysiloxane werden in Zusammensetzungen, die

(A) Alkenylgruppen aufweisendes Organopolysiloxan der Formel (I), bevorzugt der Formel (III)

(B) Si-gebundene Wasserstoffatome aufweisendes Organopolysiloxan und

(C) die Anlagerung von Si-gebundenem Wasserstoff an aliphatische Mehrfachbindung förderndem Katalysator enthalten, verwendet.

Als Komponente (B) werden vorzugsweise Organopolysiloxane der Formel (IV), bevorzugt der Formel (VI) verwendet.

Als Komponente (C) werden vorzugsweise die oben genannten Katalysatoren (3) verwendet.

Weiterhin können die Zusammensetzungen weitere Zusätze, wie (D) die Anlagerung von Si-gebundenem Wasserstoff an aliphatische Mehrfachbindung bei Raumtemperatur verzögernde Mittel, enthalten. Solche Inhibitoren sind z. B. in US-A 3 933 880 beschrieben. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol, 3-Methyl-1-pentin-3-ol und dergleichen mehr.

Die die erfindungsgemäßen Organopolysiloxane aufweisenden Zusammensetzungen werden zur Herstellung von klebrige Stoffe abweisenden Überzüge verwendet.

Herstellung von 1,4-Bis(allyloxy)-2-butin:

600 g Natriumhydroxid werden in 600 g Wasser gelöst. Zu der Natriumhydroxidlösung werden 28 g Trimethylbenzylammoniumchlorid (0,1 Mol), 220 g 2-Butin-1,4-diol (2,5 Mol) und 470 g Allylchlorid (6,0 Mol) zugegeben und die Mischung wird unter Rühren 8 Stunden lang unter Rückfluß gekocht. Zur abgekühlten Reaktionsmischung wird soviel Wasser zugegeben, bis sich das abgeschiedene Natriumchlorid klar gelöst hat und eine gute Phasentrennung erfolgt ist. Die obere organische Phase wird abgetrennt und mit 200 ml Wasser gewaschen. Restliches Wasser wird azeotrop aus der organischen Phase abdestilliert und die organische Phase wird dann unter Vakuum fraktioniert destilliert. Es werden bei 71 °C bis 72 °C und 6 hPa (abs.) 381 g 1,4-Bis(allyloxyl)-2-butin (92 % d. Th.) erhalten. Aus dem $^{1}H$-NMR-Spektrum, aus dem keine Verunreinigungen erkennbar sind, werden folgende Daten erhalten:

$^{1}H$-NMR-Spektrum ($CDCl_3$): $\delta$ = 3,96 ppm (ddd , 4 H, $-O-CH_2-CH=$)
4,10 ppm (s , 4 H, $-O-CH_2-C\equiv$)
5,11 ppm (ddtr, 2 H, $-O-CH_2-CH=CH-H$)
5,22 ppm (ddtr, 2 H, $-O-CH_2-CH=CH-H$)
5,79 ppm (ddtr, 2 H, $-O-CH_2-CH=CH_2$)

Herstellung von 2,5-Bis(allyloxy)-3-hexin:

600 g Natriumhydroxid werden in 600 g Wasser gelöst. Zu der Natriumhydroxidlösung werden 28 g Trimethylbenzylammoniumchlorid (0,1 Mol), 285 g 3-Hexin-2,5-diol (2,5 Mol) und 470 g Allylchlorid (6,0 Mol) zugegeben und die Mischung wird unter Rühren 8 Stunden lang unter Rückfluß gekocht. Zur abgekühlten Reaktionsmischung wird soviel Wasser zugegeben, bis sich das abgeschiedene Natriumchlorid klar gelöst hat und eine gute Phasentrennung erfolgt ist. Die obere organische Phase wird abgetrennt und mit 200 ml Wasser gewaschen. Restliches Wasser wird azeotrop aus der organischen Phase abdestilliert und die organische Phase wird dann unter Vakuum fraktioniert destilliert. Es werden bei 62° C bis 63° C und 6 hPa (abs.) 427 g 2,5-Bis(allyloxy)-3-hexin (88 % d. Th.)., das als farbloses Destillat anfällt, erhalten.

Herstellung von 2-Allyloxy-3-butin:

600 g Natriumhydroxid werden in 600 g Wasser gelöst. Zu der Natriumhydroxidlösung werden 28 g Trimethylbenzylammoniumchlorid (0,1 Mol), 350 g 3-Butin-2-ol und 470 g Allylchlorid (6,0 Mol) zugegeben und die Mischung wird unter Rühren 8 Stunden lang unter Rückfluß gekocht. Nach Zugabe von 1 Liter Wasser zur abgekühlten Reaktionsmischung werden zwei flüssige Phasen gebildet, die sich gut trennen. Die obere organische Phase wird abgetrennt, zweimal mit je 200 ml Wasser gewaschen und bei Normaldruck über eine kurze Füllkörperkolonne destilliert. Bei 109° C bis 111° C werden 453 g 2-Allyloxy-3-butin (82 % d. Th.) erhalten.

Beispiel 1:

Zu einer Lösung von 1,4 mg Platin, in Form einer Lösung von Platintetrachlorid in 1-Octen, in 91 g 1,4-Bis(allyloxy)-2-butin, das wie oben beschrieben hergestellt wurde, werden bei 125° C 82 g Triethoxysilan zugetropft. Nach 20 Stunden Reaktionszeit ergibt die alkalische Wasserstoffzahlbestimmung einen Umsatz von 99,5 % des Si-gebundenen Wasserstoffs im Triethoxysilan. Bei 115° C bis 120° C und 3 hPa (abs.) werden 128 g eines Silans der Formel

$$H_2C{=}CHCH_2OCH_2\underset{\substack{|\\ Si(OC_2H_5)_3}}{C}{=}CHCH_2OCH_2CH{=}CH_2 \quad ,$$

destillativ gewonnen. Das so erhaltene Silan besitzt eine Jodzahl (= Zahl, die angibt, wieviel g Jod von 100 g Substanz gebunden werden) von 226 (theoretisch: 231) und das $^1$H-NMR-Spektrum liefert folgende Daten:

$^1$H-NMR-Spektrum ($CDCl_3$): $\delta$ =

1,21 ppm (tr , 9 H, Si-O-$CH_2$-$CH_3$)

3,79 ppm (qu , 6 H, Si-O-$CH_2$-$CH_3$)

3,93 ppm (ddd , 4 H, -O-$CH_2$-CH = $CH_2$)

$$4{,}03 \text{ ppm ("d" , 2 H, } -O-C\underline{H}_2-\underset{\substack{|\\ Si}}{C}{=}CH-CH_2-)$$

$$4{,}12 \text{ ppm (d , 2 H, } -O-C\underline{H}_2-CH{=}\underset{\substack{|\\ Si}}{C}-CH_2-)$$

5,11 ppm (ddtr, 2 H, -O-$CH_2$-CH = CH -H)

5,22 ppm (ddtr, 2 H, -O-$CH_2$-CH = CH -H)

5,84 ppm (ddtr, 2 H, -O-$CH_2$-CH = $CH_2$)

6,31 ppm (trtr, 1 H, $-O-CH_2-C\underline{H}=C(Si)-CH_2$)

Beispiel 2:

In 96,3 g 1,4-Bis(allyloxy)-2-butin, das wie oben beschrieben hergestellt wurde, werden 1,4 mg Platin in Form von in 1-Octen gelöstem Platintetrachlorid gelöst. Die Lösung wird unter Stickstoff auf 125 °C erwärmt. Zu der erwärmten Lösung werden dann 227 g eines $\alpha,\omega$-Dihydrogendimethylpolysiloxans, das 0,22 Gew.-% Si-gebundenen Wasserstoff enthält, zugetropft. Nach ca. 8 Stunden Rühren bei 125 °C sind mehr als 97 % des Si-gebundenen Wasserstoffs in dem $\alpha,\omega$-Dihydrogendimethylpolysiloxan umgesetzt. Von dem Rohprodukt wird überschüssiges 1,4-Bis(allyloxy)-2-butin bei 140 °C und $10^{-3}$ hPa (abs.) destillativ entfernt. Es werden 250 g (81 % d. Th.) eines gelblichen Öls mit einer Viskosität von 24 $mm^2 \cdot s^{-1}$ bei 25 °C erhalten. Gemäß dem $^1$H-NMR-Spektrum hat das so erhaltene Dimethylpolysiloxan je einen Si-gebundenen Rest der Formel

$$H_2C=CHCH_2OCH_2\underset{|}{C}=CHCH_2OCH_2CH=CH_2 \ ,$$

in den endständigen Einheiten und eine durchschnittliche Kettenlänge von 16. Aus dem $^1$H-NMR-Spektrum ist weiterhin für das Verhältnis von

$$(Si-CH_2-CH_2-)\text{-Gruppe zu } (Si-\underset{|}{C}=CH-)\text{-Gruppe}$$

ein Wert von ca. 0,02 zu entnehmen, so daß das Verhältnis von Addition an der Allylgruppe zu Addition an der Butingruppe im 1,4-Bis(allyloxy)-2-butin ca. 1:100 beträgt. Folgende Daten sind noch aus dem $^1$-H-NMR-Spektrum zu entnehmen:

$^1$H-NMR-Spektrum: $\delta$ = 6,06 ppm (tr, 1 H, $-O-CH_2-C\underline{H}=\underset{|}{C}-Si$)
($CDCl_3$)

Beispiel 3:

In 116 g 2,5-Bis(allyloxy)-3-hexin, das wie oben beschrieben hergestellt wurde, werden 1,4 mg Platin in Form von in 1-Octen gelöstem Platintetrachlorid gelöst. Die Lösung wird unter Stickstoff auf 130 °C erwärmt. Zu der erwarmten Lösung werden dann 227 g eines $\alpha,\omega$-Dihydrogendimethylpolysiloxans, das 0,22 Gew.-% Si-gebundenen Wasserstoff enthält, zugetropft. Nach ca. 8 Stunden Rühren bei 125 °C sind 95 % des Si-gebundenen Wasserstoffs in dem $\alpha,\omega$-Dihydrogendimethylpolysiloxan umgesetzt. Von dem Rohprodukt wird überschüssiges 2,5-Bis(allyloxy)-3-hexin bei 140 °C und $10^{-3}$ hPa (abs.) destillativ entfernt. Es werden 227 g (73 % d. Th.) eines Öls mit einer Viskosität von 46 $mm^2 \cdot s^{-1}$ bei 25 °C erhalten. Gemäß dem $^1$H-NMR-Spektrum hat das so erhaltene Dimethylpolysiloxan je einen Si-gebundenen Rest der Formel

$$H_2C=CHCH_2OCH(CH_3)\underset{|}{C}=CHCH(CH_3)OCH_2CH=CH_2$$

in den endständigen Einheiten und eine durchschnittliche Kettenlänge von 20. Aus dem $^1$H-NMR-Spektrum ist weiterhin für das Verhältnis von ($Si-CH_2-CH_2-$)-Gruppe zu

$$(Si-\underset{|}{C}=CH-)\text{-Gruppe}$$

ein Wert von ca. 0,04 zu entnehmen, so daß das Verhältnis von Addition an der Allylgruppe zu Addition an der Hexingruppe im 2,5-Bis(allyloxy)-3-hexin ca. 1:50 beträgt. Folgende Daten sind noch aus dem $^1$H-NMR-Spektrum zu entnehmen:

$^1$H-NMR-Spektrum: $\delta$ = 5,80 ppm (dd, 1 H, -O-CH-C<u>H</u>=C(-)-Si)
($CDCl_3$)

Beispiel 4:

In 96,3 g 1,4-Bis(allyloxy)-2-butin werden 2,7 mg Platin in Form von in 1-Octen gelöstem Platintetrachlorid gelöst. Die Lösung wird unter Stickstoff auf 125 °C erwärmt. Bei 125 °C werden zu dieser Lösung langsam 91 g eines Mischpolymerisats aus Methylhydrogensiloxan-, Dimethylsiloxan und Trimethylsiloxaneinheiten, das eine Viskosität von 11,2 $mm^2 \cdot s^{-1}$ bei 25 °C besitzt und 0,55 Gew.-% Si-gebundenen Wasserstoff enthält, zugetropft. Nach ca. 6 Stunden Rühren bei 125 °C sind 98 % des Si-gebundenen Wasserstoffs in dem Mischpolymerisat umgesetzt. Das Rohprodukt wird filtriert und die bei 140 °C und $10^{-3}$ hPa (abs.) flüchtigen Bestandteile werden von dem Rohprodukt destillativ entfernt. Es werden 110 g (71 % d. Th.) eines klaren, gelblichen Öls mit einer Viskosität von 150 $mm^2 \cdot s^{-1}$ bei 25 °C erhalten. Aus dem $^1$H-NMR-Spektrum ist für das Verhältnis von ($Si-CH_2-CH_2-$)-Gruppe zu

(Si-C(-)=CH-)-Gruppe

ein Wert von ca. 0,025 zu entnehmen, so das das Verhältnis von Addition der ($CH_3$)HSiO-Gruppe an der Allylgruppe zu Addition der ($CH_3$)HSiO-Gruppe an der Butingruppe im 1,4-Bis(allyloxy)-2-butin ca. 1:80 beträgt. Folgende Daten werden aus dem $^1$H-NMR-Spektrum und $^{29}$Si-NMR-Spektrum erhalten:

$^1$H-NMR-Spektrum: $\delta$ = 6,2 ppm (1 H , -O-CH-C<u>H</u>=C(-)-Si)
($CDCl_3$)

$^{29}$Si-NMR-Spektrum: $\delta$ = + 7,9 ppm, + 7,3 ppm (2 Si, $(CH_3)_3SiO_{1/2}$)
($C_6D_6$)
- 20,7 ppm (10,5 Si, $(CH_3)_2SiO$)
- 35,8 ppm (6 Si, -CH=C(-)-Si($CH_3$)O)

Aus den Spektren errechnet sich ein durchschnittliches Molekulargewicht von ca. 2300. Jedes Molekül enthält durchschnittlich 6 seitenständige Si-gebundene Reste der Formel

$$H_2C=CHCH_2OCH_2C(-)=CHCH_2OCH_2CH=CH_2 .$$

Beispiel 5:

Zu 20,0 g 2-Allyloxy-3-butin, das wie oben beschrieben hergestellt wurde, werden 5 mg einer Lösung

von Platintetrachlorid in 1-Octen, die 40 mg Platin je ml Lösung enthält, zugegeben. Die Lösung wird unter Stickstoffatmosphäre auf 115 °C erwärmt. Zu der erwärmten Lösung werden dann 319,1 g eines α,ω-Dihydrogendimethylpolysiloxans, das 0,047 Gew.-% Si-gebundenen Wasserstoff enthält, zugetropft. Nach ca. 6 Std. Reaktionszeit bei 115 °C sind mehr als 99 % des Si-gebundenen Wasserstoffs in dem α,ω-Dihydrogendimethylpolysiloxan umgesetzt. Von dem Rohprodukt werden flüchtige Bestandteile, wie überschüssiges 2-Allyloxy-3-butin, bei 100 °C und 12 hPa (abs.) destillativ entfernt. Es werden 315 g eines gelblichen Öls, das eine Viskosität von 92 $mm^2 \cdot s^{-1}$ bei 25 °C und eine Jodzahl (= Zahl, die angibt, wieviel g Jod von 100 g Substanz gebunden werden) von 21,3 besitzt, erhalten. Gemäß dem $^1$H-NMR-Spektrum hat das so erhaltene Dimethylpolysiloxan endständige Si-gebundene Reste der Formel

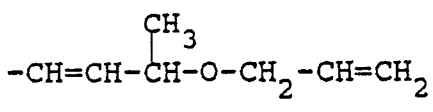

und

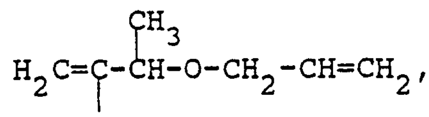

,

(A) (B)

wobei es sich bei den endständigen Resten um ein Isomerengemisch mit einem Verhältnis von 65:35 handelt.

Bindungen der Art, ≡Si-$CH_2$-$CH_2$-, die von der Addition der Si-H-Bindungen an die Allylgruppe im 2-Allyloxy-3-butin herrühren würden, sind im $^1$H-NMR-Spektrum nicht nachweisbar. Folgende Daten sind dem $^1$H-NMR-Spektrum zu entnehmen:

$^1$H-NMR-Spektrum ($CDCl_3$): δ
= 1,23 ppm (d, 3H, $CH_3$-CH-O; Isomer (A))
= 1,27 ppm (d, 3H, $CH_3$-CH-O; Isomer (B)).

Beispiel 6:

31 g des Produkts aus Beispiel 2 werden mit 208 g Cyclodecamethylpentasiloxan und 250 mg KOH in 300 mg Methanol 16 Std. lang unter Stickstoffatmosphäre bei 140 °C gerührt. Während des Abkühlens der Reaktionsmischung werden 0,5 g Eisessig zugegeben, und die abgekühlte Reaktionsmischung wird dann filtriert. Von dem Rohprodukt werden die flüchtigen Bestandteile bei 100 °C und 5 hPa destillativ entfernt. Es werden 216 g eines Dimethylpolysiloxans, das gemäß dem $^1$H-NMR-Spektrum je einen Si-gebundenen Rest der Formel

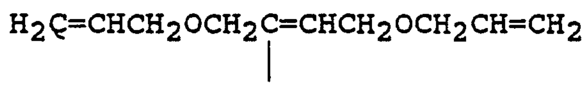

in den endständigen Einheiten enthält und das eine Viskosität von 460 $mm^2 \cdot s^{-1}$ bei 25 °C besitzt.

Aus der Jodzahl von 12,0, die für das so erhaltene Dimethylpolysiloxan ermittelt wurde, ergibt sich ein $H_2C$ = CH-Äquivalentgewicht von 3175 g pro endständiger Kohlenstoff-Kohlenstoff-Doppelbindung.

Beispiel 7:

20 g des Produktes aus Beispiel 6 werden mit 1,0 g eines Mischpolymerisats aus Trimethylsiloxaneinheiten und Methylhydrogensiloxaneinheiten, das eine Viskosität von ca. 30 $mm^2 \cdot s^{-1}$ bei 25 °C besitzt, 50 mg 2-Methyl-3-butin-2-ol und 2 mg Platin in Form von in 1-Octen gelöstem Platintetrachlorid vermischt. Die Mischung wird auf Papier in einer Dicke von 2-3 µm aufgestrichen. Sie härtet bei 120 °C in 12 sec. zu einem klebfreien Überzug aus. Bei 25 °C ist die Mischung nach 21 Std. vergelt.

## Ansprüche

1. Alkenylgruppen aufweisende Organosiliciumverbindungen aus durchschnittlichen Einheiten der Formel

$$A_aR_bSi(OR^1)_cO_{\frac{4-(a+b+c)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
$R^1$ gleich oder verschieden ist, einen Alkylrest mit 1 bis 8 Kohlenstoffatom(en) je Rest, der durch ein Ethersauerstoffatom substituiert sein kann, bedeutet, und A ein Rest der Formel

$$(H_2C=CR^4CHR^3OR^2)_xH_{1-x}\underset{|}{C}=CH_{2-y}(R^2OCHR^3CR^4=CH_2)_y$$

ist, wobei $R^2$ einen Alkylenrest mit 1 bis 4 Kohlenstoffatom(en) je Rest,
$R^3$ ein Wasserstoffatom oder einen Methylrest,
$R^4$ ein Wasserstoffatom oder einen Methyl- oder Ethylrest,
x 0 oder 1, y 0 oder 1, mit der Maßgabe, daß die Summe $x+y$ 1 oder 2 ist,
a 0 oder 1, durchschnittlich 0,003 bis 1,0,
b 0, 1, 2 oder 3, durchschnittlich 0,0 bis 3,0,
c 0, 1, 2 oder 3, durchschnittlich 0,0 bis 3,0
und die Summe $a+b+c \leq 4$, durchschnittlich 1,5 bis 4,0 ist,
mit der Maßgabe, daß mindestens ein Rest A je Molekül enthalten ist.

2. Alkenylgruppen aufweisende Organosiliciumverbindungen nach Anspruch 1, dadurch gekennzeichnet, daß es Silane oder Organopolysiloxane sind.

3. Alkenylgruppen aufweisende Organosiliciumverbindungen nach Anspruch 1 oder 2, dadurch gekennzeichnet, daß es Silane der Formel
$AR_dSi(OR^1)_{3-d}$ (II)
sind, wobei R gleich oder verschieden ist, einen einwertigen, gegebenenfalls halogenierten Kohlenwasserstoffrest mit 1 bis 18 Kohlenstoffatom(en) je Rest bedeutet,
$R^1$ gleich oder verschieden ist, einen Alkylrest mit 1 bis 8 Kohlenstoffatom(en) je Rest, der durch ein Ethersauerstoffatom substituiert sein kann, bedeutet, und A ein Rest der Formel

$$(H_2C=CR^4CHR^3OR^2)_xH_{1-x}\underset{|}{C}=CH_{2-y}(R^2OCHR^3CR^4=CH_2)_y$$

ist, wobei $R^2$ einen Alkylenrest mit 1 bis 4 Kohlenstoffatom(en) je Rest,
$R^3$ ein Wasserstoffatom oder einen Methylrest,
$R^4$ ein Wasserstoffatom oder einen Methyl- oder Ethylrest,
x 0 oder 1, y 0 oder 1, mit der Maßgabe, daß die Summe $x+y$ 1 oder 2 ist,
und d 0, 1 oder 2 bedeutet.

4. Alkenylgruppen aufweisende Organosiliciumverbindungen nach Anspruch 1 oder 2, dadurch gekennzeichnet, daß es Organopolysiloxane der Formel
$A_gR_{3-g}SiO(SiR_2O)n(SiRAO)_mSiR_{3-g}A_g$ (III)
sind, wobei R gleich oder verschieden ist, einen einwertigen, gegebenenfalls halogenierten Kohlenwasserstoffrest mit 1 bis 18 Kohlenstoffatom(en) je Rest bedeutet, und
A ein Rest der Formel

$$(H_2C=CR^4CHR^3OR^2)_xH_{1-x}\underset{|}{C}=CH_{2-y}(R^2OCHR^3CR^4=CH_2)_y$$

ist, wobei $R^2$ einen Alkylenrest mit 1 bis 4 Kohlenstoffatom(en) je Rest,
$R^3$ ein Wasserstoffatom oder einen Methylrest,
$R^4$ ein Wasserstoffatom oder einen Methyl- oder Ethylrest,
x 0 oder 1, y 0 oder 1, mit der Maßgabe, daß die Summe $x+y$ 1 oder 2 ist,
g 0 oder 1,

n 0 oder eine ganze Zahl von 1 bis 1500 und
m 0 oder eine ganze Zahl von 1 bis 100 bedeutet,
mit der Maßgabe, daß mindestens ein Rest A je Molekül enthalten ist.

5. Alkenylgruppen aufweisende Organosiliciumverbindungen nach einem der Ansprüche 1 bis 4, dadurch gekennzeichnet, daß x und y jeweils 1 sind.

6. Alkenylgruppen aufweisende Organosiliciumverbindungen nach einem der Ansprüche 1 bis 5, dadurch gekennzeichnet, daß A ein Rest der Formel

$$H_2C{=}CHCH_2OCH_2\underset{|}{C}{=}CHCH_2OCH_2CH{=}CH_2$$

ist.

7. Verfahren zur Herstellung der Alkenylgruppen aufweisenden Organosiliciumverbindungen nach einem der Ansprüche 1 bis 6, dadurch gekennzeichnet, daß
in einer 1. Stufe
eine organische Verbindung (1) der Formel
$(H_2C=CR^4CHR^3OR^2)_xH_{1-x}C{\equiv}CH_{1-y}(R^2OCHR^3CR^4=CH_2)_y$
wobei $R^2$ einen Alkylenrest mit 1 bis 4 Kohlenstoffatom(en) je Rest,
$R^3$ ein Wasserstoffatom oder einen Methylrest,
$R^4$ ein Wasserstoffatom oder einen Methyl- oder Ethylrest,
x 0 oder 1 und y 0 oder 1, mit der Maßgabe, daß die Summe x + y 1 oder 2 ist, bedeutet,
an eine Organosiliciumverbindung (2) mit mindestens einem Si-gebundenem Wassserstoffatom in ihrem Molekül in Gegenwart von die Anlagerung von Si-gebundenem Wasserstoff an aliphatische Mehrfachbindung förderndem Katalysator (3) angelagert wird und gegebenenfalls in einer 2. Stufe
das nach Beendigung der 1. Stufe vorliegende, Alkenylgruppen aufweisende Organopolysiloxan mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

8. Verfahren nach Anspruch 7, dadurch gekennzeichnet, daß als Organosiliciumverbindung (2) mit mindestens einem Si-gebundenem Wasserstoffatom in ihrem Molekül Silane (2a) der Formel
$HR_dSi(OR^1)_{3-d}$ (V),
wobei R gleich oder verschieden ist, einen einwertigen, gegebenenfalls halogenierten Kohlenwasserstoffrest mit 1 bis 18 Kohlenstoffatom(en) je Rest bedeutet,
$R^1$ gleich oder verschieden ist, einen Alkylrest mit 1 bis 8 Kohlenstoffatom(en) je Rest, der durch ein Ethersauerstoffatom substituiert sein kann, bedeutet, und d 0, 1 oder 2 ist,
verwendet werden.

9. Verfahren nach Anspruch 7, dadurch gekennzeichnet, daß als Organosiliciumverbindung (2) mit mindestens einem Si-gebundenem Wasserstoffatom in ihrem Molekül Organopolysiloxane (2c) der Formel
$H_hR_{3-h}SiO(SiR_2O)_o(SiRHO)_pSiR_{3-h}H_h$ (VI),
wobei R gleich oder verschieden ist, einen einwertigen, gegebenenfalls halogenierten Kohlenwasserstoffrest mit 1 bis 18 Kohlenstoffatom(en) je Rest bedeutet,
$R^1$ gleich oder verschieden ist, einen Alkylrest mit 1 bis 8 Kohlenstoffatom(en) je Rest, der durch ein Ethersauerstoffatom substituiert sein kann, bedeutet,
h 0 oder 1,
o 0 oder eine ganze Zahl von 1 bis 1500
p 0 oder eine ganze Zahl von 1 bis 100 bedeutet,
verwendet werden.

10. Zusammensetzungen enthaltend
(A) Alkenylgruppen aufweisendes Organopolysiloxan gemäß Anspruch 1, 2 oder 4
(B) Si-gebundene Wasserstoffatome aufweisendes Organopolysiloxan und
(C) die Anlagerung von Si-gebundenem Wasserstoff an aliphatische Mehrfachbindung förderndem Katalysator.

11. Verwendung der Zusammensetzungen nach Anspruch 10 zur Herstellung von klebrige Stoffe abweisenden Überzügen.